(19) **Europäisches Patentamt / European Patent Office / Office européen des brevets**

(11) **EP 3 889 957 B1**

(12) **EUROPEAN PATENT SPECIFICATION**

(45) Date of publication and mention of the grant of the patent:
**06.05.2026 Bulletin 2026/19**

(21) Application number: **20192644.1**

(22) Date of filing: **25.08.2020**

(51) International Patent Classification (IPC):
**G10L 17/00** (2013.01)    **H04W 64/00** (2009.01)

(52) Cooperative Patent Classification (CPC):
**G10L 17/00; H04W 4/023;** G10L 15/22; H04W 4/80

(54) **METHOD AND APPARATUS FOR CONTROLLING INTELLIGENT VOICE CONTROL DEVICE AND STORAGE MEDIUM**

VERFAHREN UND VORRICHTUNG ZUR STEUERUNG EINER INTELLIGENTEN SPRACHSTEUERUNGSVORRICHTUNG UND SPEICHERMEDIUM

PROCÉDÉ ET APPAREIL DE COMMANDE DE DISPOSITIF DE COMMANDE VOCALE INTELLIGENT ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020 CN 202010242310**

(43) Date of publication of application:
**06.10.2021 Bulletin 2021/40**

(73) Proprietor: **Beijing Xiaomi Mobile Software Co., Ltd.**
**Beijing 100085 (CN)**

(72) Inventors:
• **JIANG, Xiaowei**
  **Beijing, Beijing 100085 (CN)**
• **LI, Zheng**
  **Beijing, Beijing 100085 (CN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) References cited:
**EP-A1- 2 683 147      EP-A1- 3 209 029**
**EP-A2- 1 398 913      US-A1- 2010 046 586**
**US-A1- 2015 026 580   US-A1- 2015 256 954**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to a field of wireless carrier communication technologies, and more particularly, to a method and an apparatus for controlling an intelligent voice control device and a storage medium.

### BACKGROUND

With development of technologies, more and more smart home devices appear in people's lives. Controlling smart home devices through an intelligent voice control system is also gradually applied to smart home. The intelligent voice control system includes an intelligent voice control device. The user issues a control voice command to control the smart home devices, and the smart voice control device recognizes the control voice command through voice recognition to obtain the control voice command, and realizes the control of the smart home devices according to the obtained control voice command, without manual operation.

However, in the related art, if there are multiple intelligent voice control devices in a user's home, when the user issues a control voice command, all the smart voice devices recognize the user's control voice command and may respond unintentionally.

US 2010/046586 A1 discloses a method for enabling a device function at a local device based on distance information, comprising: establishing a communication link with a remote device over a UWB medium using a multiple access protocol; determining a distance between the local device and the remote device; and controlling a device function for the remote device based on the determined distance, wherein the operation of controlling the device function enables the device function when the determined distance is below a set distance threshold, and wherein the operation of controlling the device function disables the device function when the determined distance is above the set distance threshold.

US 2015/026580 A1 discloses a system of communicating between first and second electronic devices. Therein, in a first device, receiving from a second device, voice representative information acquired by the second device, and connection information indicating characteristics of communication to be used in establishing a communication link with the second device, the system comparing the voice representative information with predetermined reference voice representative information and in response to the comparison, establishes a communication link with the second device by using the connection information received from the second device.

### SUMMARY

In order to overcome problems in the related art, embodiments of the present disclosure provide a method and an apparatus for controlling an intelligent voice control device and a storage medium. The invention is set out in the appended set of claims.

According to a first aspect of embodiments of the present disclosure, a method for controlling a voice control device applicable for the voice control device is provided. The method includes: in response to receiving a control voice issued by a user, determining whether the voice control device is a master responsive voice control device; wherein the master responsive voice control device is configured to receive the control voice of the user and execute the control voice and in response to determining that the voice control device is the master responsive voice control device, responding to the control voice by the voice control device; wherein, determining whether the voice control device is the master responsive voice control device comprises: in response to receiving a first indicating message sent by a positioning device of a user, determining that the voice control device is the master responsive voice control device, wherein the first indicating message is configured to indicate that the voice control device is the master responsive voice control device for responding to the control voice.. Therein, the control voice is the user's voice issuing a control voice command in order to control the voice control device.

Preferably, determining whether the voice control device is the master responsive voice control device includes: determining a positioning device of the user corresponding to the control voice; and determining whether the oice control device is the master responsive voice control device.

Preferably, determining the positioning device corresponding to the control voice of the user, includes: performing voiceprint recognition on the control voice, and determining a positioning device corresponding to the recognized voiceprint as the positioning device corresponding to the control voice of the user based on a correspondence between the positioning device and the voiceprint.

Preferably, the method further includes: in response to receiving a second indicating message sent by a positioning device, determining that the voice control device is no longer the master responsive voice control device, in which the second indicating message is configured to indicate that the voice control device is no longer the corresponding master responsive voice control device.

In a second aspect of the embodiments of the present disclosure, an apparatus for controlling an voice control device is provided. The apparatus includes:

a processor;
a memory for storing instructions executable by the processor;
in which the processor is configured to execute the method for controlling an voice control device according to the first aspect or any of the embodiments of the first aspect.

In a third aspect of the embodiments of the present disclosure, a non-transitory computer-readable storage medium is provided. When instructions in the storage medium are executed by a processor of an electronic device, the electronic device is caused to implement the method for controlling an voice control device according to the first aspect or any of the embodiments of the first aspect.

The technical solutions according to the embodiments of the present disclosure may include the following beneficial effects. When the intelligent voice control device receives the control voice issued by the user, it is determined whether the voice control device is the master responsive voice control device. When the voice control device is the master responsive voice control device, the voice control device responds to the control voice issued by the user, i.e. operate according to the control voice command. When the voice control device is not the master responsive voice control device, the voice control device does not respond to the control voice issued by the user, thereby preventing a plurality of intelligent voice control devices from simultaneously responding to one control voice issued by the user.

It should be understood that the above general description and the following detailed description are only exemplary and explanatory, and do not limit the present disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a flowchart of a method for controlling an intelligent voice control device according to an exemplary embodiment.
FIG. 2 is a flowchart of a method for controlling an intelligent voice control device according to another exemplary embodiment.
FIG. 3 is a flowchart of a method for controlling an intelligent voice control device according to yet another exemplary embodiment.
FIG. 4 is a schematic diagram of measuring a flight distance between two devices by using UWB (Ultra Wide Band) according to an exemplary embodiment.
FIG. 5 is a block diagram of an apparatus for controlling an intelligent voice control device according to an exemplary embodiment.
FIG. 6 is a block diagram of an apparatus for controlling an intelligent voice control device according to another exemplary embodiment.
FIG. 7 is a block diagram of an apparatus for controlling an intelligent voice control device according to an exemplary embodiment.

## DETAILED DESCRIPTION

Reference will be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

With a method for controlling an intelligent voice control device according to the present disclosure, a master responsive intelligent voice control device is determined based on a user positioning device, and the master responsive intelligent voice control device responds to a control voice issued by the user to prevent a plurality of intelligent voice control devices from simultaneously responding to the control voice issued by the user and controlling smart home devices.

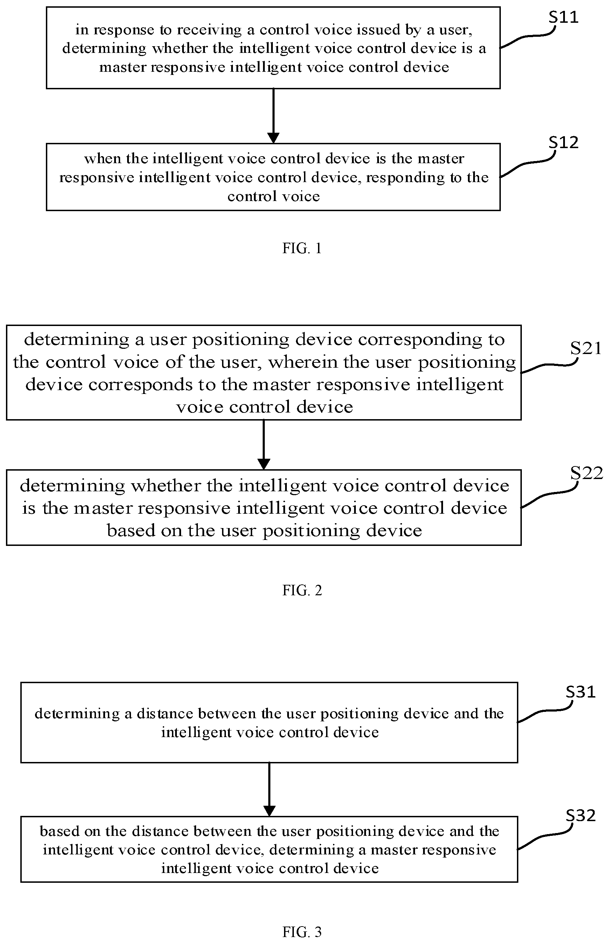

FIG. 1 is a flowchart of a method for controlling an intelligent voice control device according to an exemplary embodiment. As illustrated in FIG. 1, the method for controlling an intelligent voice control device applicable for the intelligent voice control device includes the following actions.

At block S11, in response to receiving a control voice issued by a user, preferably including at least one control voice command in order to operate the intelligent voice control device, it is determined whether the intelligent voice control device is a master responsive intelligent voice control device.

The intelligent voice control device may be a device such as a smart speaker or a smart robot that supports controlling smart home devices through voice input.

One user can control a plurality of intelligent voice control devices. The user issues the control voice. Within a preset range, the plurality of intelligent voice control devices may simultaneously receive the control voice issued by the user. In the present disclosure, when the intelligent voice control device receives the control voice issued by the user, it is determined whether the intelligent voice control device is the master responsive intelligent voice control device according to the control voice issued by the user.

At block S12, when the intelligent voice control device is the master responsive intelligent voice control device, the control voice is responded to.

With the method for controlling an intelligent voice control device according to the embodiments of the present disclosure, when the intelligent voice control device receives the control voice issued by the user, it is determined whether the intelligent voice control device is the master responsive intelligent voice control device. When the intelligent voice control device is the master responsive intelligent voice control device, the intelligent voice control device responds to the control voice. When the intelligent voice control device is not the master responsive intelligent voice control device, the intelligent voice control device does not respond to the control voice, thereby preventing a plurality of intelligent voice control devices from simultaneously responding to the one control voice issued by the user.

The following describes a method for controlling an intelligent voice control device according to the embodiments of the present disclosure in combination with actual applications.

Embodiments of the present disclosure first describe the above-mentioned process of determining whether the intelligent voice control device is the master responsive intelligent voice control device.

FIG. 2 is a flowchart of a method for controlling an intelligent voice control device according to another exemplary embodiment. As illustrated in FIG. 2, the process of determining whether the intelligent voice control device is the master responsive intelligent voice control device includes actions at block S21 and block S22.

At block S21, a user positioning device corresponding to the control voice of the user is determined, in which the user positioning device corresponds to the master responsive intelligent voice control device.

At block S22, it is determined whether the intelligent voice control device is the master responsive intelligent voice control device based on the user positioning device.

The user positioning device may be a handheld device or a wearable device for locating the user. For example, the user positioning device may be one or more of mobile phones, watches, bracelets, and tags. The mobile phone may be used as a main control device of the user positioning device.

When the intelligent voice control device receives the control voice issued by the user, the user positioning device corresponding to the control voice of the user is determined. Further, the master responsive intelligent voice control device corresponding to the user positioning device is determined.

In an implementation of the embodiments of the present disclosure, a binding relation may be established between the user positioning device and the control voice, and a correspondence relation may be also established between the user positioning device and the master responsive intelligent voice control device.

The intelligent voice control device determines the user positioning device bound to the control voice by performing voiceprint recognition on the control voice issued by the user, and it is determined whether the intelligent voice control device is the master responsive intelligent voice control device bound to the user positioning device.

With the method for controlling an intelligent voice control device described above, communication between the intelligent voice control device and the user positioning device are established based on the user's voiceprint, which ensures the certainty and security of responding to the control voice of the user and avoids responding to control voices of users other than the user.

In an exemplary embodiment of the present disclosure, when the intelligent voice control device receives a first indicating message sent by the user positioning device or a main control device of the user positioning device, the intelligent voice control device determines itself as the master responsive intelligent voice control device corresponding to the user positioning device or the main control device of the user positioning device. The first indicating message is configured to indicate that the intelligent voice control device is the corresponding master responsive intelligent voice control device.

In an exemplary embodiment of the present disclosure, when the intelligent voice control device receives a second indicating message sent by the user positioning device or the main control device of the user positioning device, the intelligent voice control device determines itself as no longer the master responsive intelligent voice control device corresponding to the user positioning device or the main control device of the user positioning device. The second indicating message is configured to indicate that the intelligent voice control device is no longer the corresponding master responsive intelligent voice control device.

FIG. 3 is a flowchart of a method for controlling an intelligent voice control device according to yet another exemplary embodiment. As illustrated in FIG. 3, the embodiment of the present disclosure provides a method for controlling an intelligent voice control device applicable for a user positioning device or a main control device of the user positioning device, and the method includes the following actions.

At block S31, a distance between the user positioning device and the intelligent voice control device is determined.

At block S32, based on the distance between the user positioning device and the intelligent voice control device, a master responsive intelligent voice control device corresponding to the user positioning device is determined.

The distance between the user positioning device and the intelligent voice control device in the present disclosure may be determined by Ultra Wide Band (UWB) technologies.

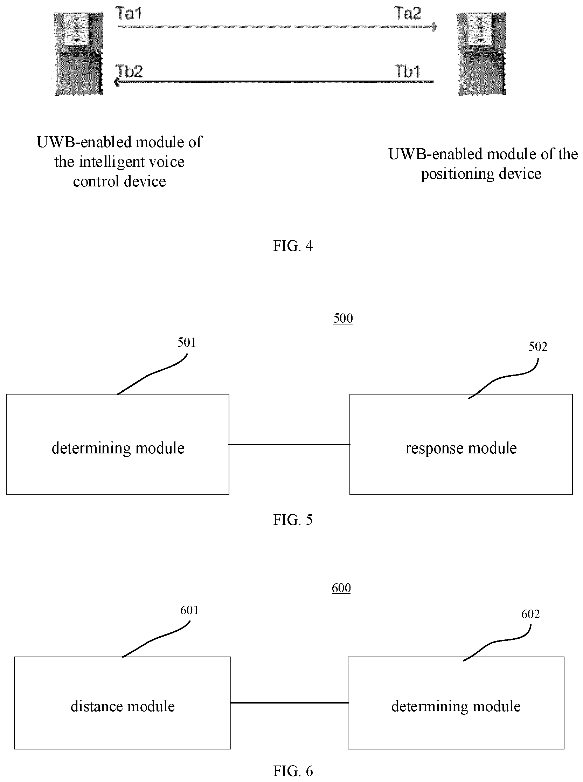

In an embodiment of the present disclosure, when adopting UWB technologies to measure the distance between the user positioning device and the intelligent voice control device, and a two way-time of flight (TW-TOF) method is adopted. That is, a UWB-enabled module in each device generates an independent time stamp from the start. As illustrated in FIG. 4, the UWB-enabled module of the intelligent voice control device sends a pulse signal of request nature at a time point Ta1 on its independent time stamp, which corresponds to a time point Tb1 on the time-stamp of the positioning device. The UWB-enabled module of the positioning device transmits a signal of response nature at a time point Tb2 on its independent timestamp, and the signal of response nature is received by the intelligent voice control device at a time point Ta2 on the independent time-stamp of the intelligent voice control device. The flight time of the pulse signal between the two devices maybe calculated to determine the flight distance. A formula for calculating the flight distance is as follows:

$$S = C \times \left[ \left( Ta2 - Ta1 \right) - \left( Tb2 - Tb1 \right) \right]$$

Where, S is the flight distance, and C is a light speed.

Further, in the embodiments of the present disclosure, the distance between the user positioning device and the intelligent voice control device may be also determined based on quality of a wireless communication signal.

The wireless communication signal may be a Bluetooth Low Energy (BLE) signal or a wireless fidelity (WiFi) signal.

In an implementation, the distance between the user positioning device and each intelligent voice control device is determined by the user positioning device or the main control device of the user positioning device. The intelligent voice control device broadcasts a BLE or WiFi signal. After receiving the BLE or WiFi signal broadcasted by the intelligent voice control device, the user positioning device determines the distance between the user positioning device and each intelligent voice control device according to the BLE/WiFi signal quality. When the main control device of the user positioning device determines the distance between the user positioning device and each intelligent voice control device, the main control device sends UWB parameters of the intelligent voice control device to the user positioning device, so that the user positioning device measures the distance between the user positioning device and the intelligent voice control device.

In the above method for controlling the intelligent voice control device, the master responsive intelligent voice control device is determined based on the BLE or WiFi signal, which avoids an erroneous response because that the intelligent voice control device is too far away or too close to the user positioning device, and improves accuracy of responding to the user control voice.

Further, after the user positioning device or the main control device of the user positioning device determines the master responsive intelligent voice control device, the user positioning device or the main control device of the user positioning device sends a first indicating message to the master responsive intelligent voice control device. The first indicating message is configured to indicate the intelligent voice control device that the intelligent voice control device is the master responsive intelligent voice control device. The master responsive intelligent voice control device is configured to receive a control voice of the user and execute the control voice of user.

In the present disclosure, after the master responsive intelligent voice control device receives the first indicating message sent by the user positioning device, the master responsive intelligent voice control device is determined as the master responsive intelligent voice control device bound to the user positioning device. The master responsive intelligent voice control device responds to the control voice issued by the user when receiving the control voice issued by the user. Other intelligent voice control devices that do not receive the first indicating message sent by the user positioning device are not the master responsive intelligent voice control device bound to the user positioning device, and do not respond to the control voice issued by the user when receiving the control voice issued by the user.

In an implementation of an embodiment of the present disclosure, when there is already a master responsive intelligent voice control device bound to the user positioning device currently, that is, a master responsive intelligent voice control device originally bound to the user positioning device. When the currently existing master responsive intelligent voice control device is different from the master responsive intelligent voice control device re-determined by the user positioning device, the user positioning device or the main control device of the user control device sends the second indicating message to the currently existing master responsive intelligent voice control device (the master responsive intelligent voice control device originally bound to the user positioning device). After receiving the second indicating message sent by the user positioning device or the main control device of the user positioning device, the master responsive intelligent voice control device originally bound to the user positioning device determines that it is no longer the master responsive intelligent voice control device and no longer responds to the control voice from the user.

In the above method for controlling the intelligent voice control device, by sending the first indicating message or the second indicating message to the intelligent voice control device, the master responsive intelligent voice control device may be accurately determined.

In an exemplary embodiment of the present disclosure, before determining the distance between the user positioning device and the intelligent voice control device, the intelligent voice control device may broadcast a wireless communication signals to enable the user positioning device to discover the intelligent voice control device.

The intelligent voice control device sends a UWB signal to the user positioning device and a UWB session is established, or the intelligent voice control device broadcasts wireless communication signals to enable the user positioning device to discover the intelligent voice control device. The broadcasted wireless communication signals are BLE or WiFi signals. The user positioning device discovers the intelligent voice control device through the established UWB session, or the broadcasted wireless communication signals, and calculates the distance between the user positioning device and the discovered intelligent voice control device.

In an implementation, when the user positioning device receives the UWB session sent by the intelligent voice control device, it indicates that the intelligent voice control device supports the UWB session. The user positioning device receives the UWB session and, the UWB session between the user positioning device and the corresponding intelligent voice control device.

In another implementation, the user positioning device receives the wireless communication signals broadcasted by the intelligent voice control device, and communicates with the corresponding intelligent voice control device.

In an exemplary embodiment of the present disclosure, the user positioning device may simultaneously receive UWB signals or broadcasted wireless communication signals from a plurality of intelligent voice control devices to establish the UWB session. When establishing UWB sessions or communication connections with the plurality of intelligent voice control devices, the user positioning device may select the intelligent voice control devices based on a preset signal quality threshold, and an ultra-wideband sessions can be established between the user positioning device and the selected intelligent voice control devices. In the embodiment of the present disclosure, in order to achieve better signal quality of the selected intelligent voice control device, one way is to select the intelligent voice control devices where the signal quality differences between the intelligent voice control devices are less than a preset difference threshold. In another way, the intelligent voice control devices with a signal quality greater than a preset signal quality threshold may be selected.

It is understood that, in the embodiments of the present disclosure, when the main control device of the user positioning device finds that the intelligent voice control device supports the ultra-wideband session, the main control device sends the UWB parameters of the intelligent voice control device to the user positioning device to facilitate the user positioning device to measure the distance between the user positioning device and the intelligent voice control device and establishes the ultra-wideband session with the intelligent voice control device.

In an exemplary embodiment of the present disclosure, after the user positioning device determines the master responsive intelligent voice control device, the distance between the user positioning device and the intelligent voice control device may change due to the user's movement, or when a preset time period is reached since the user positioning device calculates the distance between the user positioning device and the intelligent voice control device last time, or when a new intelligent voice control device is discovered based on the ultra-wideband session or a wireless communication message, the user positioning device recalculates the distance between the user positioning device and the intelligent voice control device discovered, thereby re-determining the master responsive intelligent voice control device.

In the above method for controlling the intelligent voice control device, the user positioning device may re-determine the master responsive intelligent voice control device according to the preset conditions, which solves the problem that the user control voice is not responded in time due to distance, and improves the timeliness of the intelligent voice control device responding to the control voice of user.

In an exemplary embodiment of the present disclosure, the binding relation between the control voice issued by the user and the user positioning device is bound by the user's voiceprint.

When the user sends the control voice, the intelligent voice control device determines the positioning device corresponding to the voiceprint of the control voice by recognizing the voiceprint of the control voice issued by the user.

In the above method for controlling the intelligent voice control device, the communication between the intelligent voice control device and the user positioning device is established based on the user's voiceprint, which ensures the certainty and security of the control voice of the user and avoids responding to voices other than the user voice.

Based on the same concept, the embodiments of the present disclosure also provide an apparatus for controlling an intelligent voice control device.

It is understood that, in order to realize the above-mentioned functions, the apparatus for controlling an intelligent voice control device according to the embodiments of the present disclosure includes hardware structures and/or software modules to implement various function. With reference to the units and algorithm steps of the examples disclosed in the embodiments of the present disclosure, the embodiments of the present disclosure may be implemented in the form of hardware or a combination of hardware and computer software. Whether a function is executed by hardware or computer software driven hardware depends on the specific application and design constraints of the technical solution. Those skilled in the art may use different methods to implement the described functions for each specific application, but such implementation should not be considered to exceed the scope of the technical solutions of the embodiments of the present disclosure.

FIG. 5 is a block diagram of an apparatus for controlling an intelligent voice control device according to an exemplary embodiment. As illustrated in FIG. 5, the apparatus 500 for controlling the intelligent voice control device includes a determining module 501 and a response module 502.

The determining module 501 is configured to, in response to receiving a control voice issued by a user, determine whether the intelligent voice control device is a master responsive intelligent voice control device. The response module 502 is configured to, in response to determining that the intelligent voice control device is the master responsive intelligent voice control device, respond to the control voice. The control device of the above intelligent voice control device determines the positioning device bound to the user based on the control voice of user, and determines the master responsive intelligent voice control device through the positioning device. The master responsive intelligent voice control device is responsible for responding to the control voice of user to avoid the plurality of the intelligent voice control devices respond to the control voice of user simultaneously, which reduces the waste of resources and improves the response efficiency of the intelligent voice control device.

In an exemplary embodiment of the present disclosure, the determining module 501 is configured to: determine a user positioning device corresponding to the control voice of the user, in which the user positioning device corresponds to the master responsive intelligent voice control device; and determine whether the intelligent voice control device is the master responsive intelligent voice control device based on the user positioning device.

In an exemplary embodiment of the present disclosure, the determining module 501 determines a user positioning device corresponding to the control voice of the user or the main control device of the user positioning device by: performing voiceprint recognition on the control voice, and determining the user positioning device corresponding to the recognized voiceprint as the user positioning device or the main control device of the user positioning device corresponding to the control voice based on a correspondence between the user positioning device and the voiceprint.

In the apparatus for controlling an intelligent voice control device described above, the communication between the intelligent voice control device and the user positioning device is established based on the voiceprint of the user, which ensures the certainty and security of responding to the control voice of user and avoids the response of the control voices of users other than the user.

In an exemplary embodiment of the present disclosure, the determining module 501 is further configured to: in response to receiving a first indicating message sent by a user positioning device, determine that the intelligent voice control device is the master responsive intelligent voice control device, in which the first indicating message is configured to indicate that the intelligent voice control device is the corresponding master responsive intelligent voice control device.

In an exemplary embodiment of the present disclosure, the determining module 501 is further configured to: in response to receiving a second indicating message sent by a user positioning device, determine that the intelligent voice control device is no longer the master responsive intelligent voice control device, in which the second indicating message is configured to indicate that the intelligent voice control device is no longer the corresponding master responsive intelligent voice control device.

FIG. 6 is a block diagram of an apparatus for controlling an intelligent voice control device according to another exemplary embodiment. As illustrated in FIG. 6, according to an exemplary embodiment of the present disclosure, an apparatus for controlling an intelligent voice control device applicable for a user positioning device or a main control device of the user positioning device is provided. The apparatus includes a distance module 601 and a determining module 602. The distance module 601 is configured to determine a distance between the user positioning device and the intelligent voice control device. The determining module 602 is configured to determine a master responsive intelligent voice control device based on the distance between the user positioning device and the intelligent voice control device.

In an exemplary embodiment of the present disclosure, the distance module 601 is configured to: determine the distance between the user positioning device and the intelligent voice control device based on an ultra-wideband session range of the intelligent voice control device; or determine the distance between the user positioning device and the intelligent voice control device based on a quality of a received wireless communication signal of the intelligent voice control device.

In an exemplary embodiment of the present disclosure, the determining module 602 is configured to: after the user positioning device or the main control device of the user positioning device determines the master responsive intelligent voice control device, send a first indicating message to the master responsive intelligent voice control device to indicate that the master responsive intelligent voice control device is the corresponding master responsive intelligent voice control device.

In an exemplary embodiment of the present disclosure, the determining module 602 is configured to: in response to determining that the determined master responsive intelligent voice control device is different from an existing master responsive intelligent voice control device, send a second indicating message to the existing master response intelligent voice control device to indicate that the existing master responsive intelligent voice control device is no longer the corresponding master responsive intelligent voice control device.

The above apparatus for controlling an intelligent voice control device may accurately determine the master responsive intelligent voice control device by sending the first indicating message or the second indicating message to the intelligent voice control device.

In an exemplary embodiment of the present disclosure, the distance module 601 is further configured to determine a distance between the user positioning device and a discovered intelligent voice control device.

In an exemplary embodiment of the present disclosure, the determining module 602 is further configured to: when the intelligent voice control device discovered by the user positioning device or the main control device of the user positioning device supports an ultra-wideband session, establish an ultra-wideband session between the user positioning device and the intelligent voice control device.

In an exemplary embodiment of the present disclosure, the ultra-wideband session is established for a plurality of the intelligent voice control devices, and signal quality differences between the plurality of the intelligent voice control devices are less than a preset difference threshold, or signal qualities of the plurality of the intelligent voice control devices are greater than a preset signal quality threshold.

In an exemplary embodiment of the present disclosure, the determining module 602 is further configured to: when a preset triggering condition is met, re-determine the distance between the user positioning device and the intelligent voice control device; in which the preset triggering condition includes one or more of reaching a preset period, discovering a new intelligent voice control device, and moving the user positioning device by a preset distance.

The above apparatus for controlling an intelligent voice control device may re-determine the master responsive intelligent voice control device according to the preset condition, which solves the problem that the user control voice is not responded in time due to distance, and improves the timeliness of the intelligent voice control device responding to the control voice of the user.

Regarding the apparatuses in the above embodiment, the specific manner in which each module performs operations has been described in detail in the embodiment related to the method, which are not repeated herein.

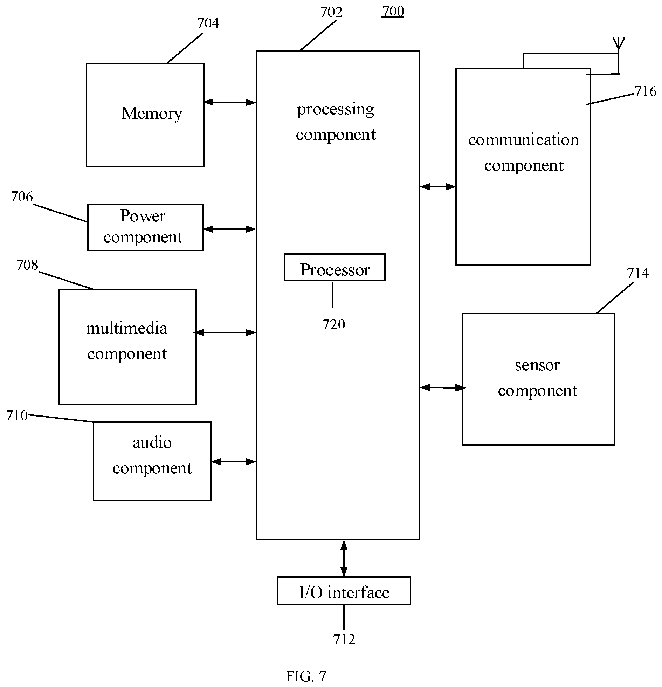

FIG. 7 is a block diagram of an apparatus 700 for controlling an intelligent voice control device according to an exemplary embodiment. For example, the apparatus 700 may be a mobile phone, a computer, a digital broadcasting terminal, message sending and receiving equipment, a games console, a tablet device, a medical device, a fitness device and a personal digital assistant.

As illustrated in FIG. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operations of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. When the apparatus 700 is in an operation mode, such as a shooting mode or a video mode, the front camera and/or the rear camera may receive external multimedia data. Each front camera and rear camera can be a fixed optical lens system or have focal length and optical zoom capabilities.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may further include an acceleration sensor, a gyro sensor, a magnetic sensor, a pressure sensor, or a temperature sensor.

The communication component 716 is configured to facilitate communication, wired or wirelessly, between the apparatus 700 and other devices. The apparatus 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 704 including the instructions, executable by the processor 720 in the apparatus 700, for performing the above-described methods. For example, the non-transitory computer-readable storage medium may be a ROM, a RAM, a CD-ROM, a magnetic tape, a floppy disc, an optical data storage device, and the like.

It is understood that in this disclosure, "plurality" refers to two or more, and other quantifiers are similar. In addition, it is noted that "and/or" in the text only describes a relation of the related objects and indicates three relations, for example, "A and/or B" indicates three relations, i.e., A exists alone, A and B exist simultaneously, and B exists alone. The character "/" generally indicates that it is either the former related object or the latter related object. The singular forms "a", "said" and "the" are also intended to include the majority form unless the context clearly indicates other meanings.

It is further understood that terms such as "first" and "second" are used to describe various information, but the information should not be limited to these terms. These terms are only used to distinguish the same type of information from each other, and do not indicate a specific order or importance. In fact, the expressions "first" and "second" may be used interchangeably. For example, without departing from the scope of the present disclosure, the first information may also be referred to as the second information, and similarly, the second information may also be referred to as the first information.

It is further understood that although the operations are described in a specific order in the drawings in the embodiments of the present disclosure, it should not be construed as requiring that the operations are performed in the specific order shown or in a serial order, or performed all to get the desired result. In certain environments, multitasking and parallel processing may be advantageous.

Those skilled in the art may easily think of other embodiments of the present disclosure after considering the description and practicing the disclosure disclosed herein. This disclosure is intended to cover any variations, uses, or adaptive changes that follow the general principles of this disclosure and include common general knowledge or customary technical means in the technical field not disclosed in this disclosure. The description and examples are to be considered exemplary only, and the true scope of this disclosure are disclosed by the claims.

## Claims

1. A method for controlling a plurality of voice control devices, applicable to a positioning device of a user or a master control device of the positioning device, **characterized by** comprising:

determining (S31) a distance between the positioning device and a discovered voice control device;

determining (S32) a master responsive voice control device based on the distance between the positioning device and the discovered voice control device, the master responsive voice control device is configured to respond to a control voice issued by a user;

sending a first indicating message to the master responsive voice control device to indicate that the master responsive voice control device is the corresponding master responsive voice control device for responding to the control voice; and

in response to determining that the determined master responsive voice control device is different from an existing master responsive voice control device, sending a second indicating message to the existing master response voice control device to indicate that the existing master responsive voice control device is no longer the corresponding master responsive voice control device;

wherein determining (S31) the distance between the positioning device and the discovered voice control device comprises:

determining the distance between the positioning device and the discovered voice control device based on an ultra-wideband session range of the discovered voice control device; or

determining the distance between the positioning device and the discovered voice control device based on a quality of a received wireless communication signal of the discovered voice control device.

2. The method according to claim 1, further comprising: when the voice control device discovered by the positioning device or the master control device of the positioning device supports an ultra-wideband session, establishing an ultra-wideband session between the positioning device and the voice control device.

3. The method according to claim 2, wherein the ultra-wideband session is established for a plurality of the voice control devices and signal quality differences between the plurality of the voice control devices are less than a preset difference threshold, or signal qualities of the plurality of the voice control devices are greater than a preset signal quality threshold.

4. The method according to any one of claims 1 to 3, further comprising:

when a preset triggering condition is met, re-determining the distance between the positioning device and the discovered voice control device; wherein

the preset triggering condition comprises one or more of reaching a preset time period, discovering a new voice control device, and moving the positioning device by a preset distance.

5. An apparatus for controlling a voice control device, comprising:

a processor;
a memory for storing instructions executable by the processor;
wherein the processor is configured to execute the method for controlling the voice control device according to any one of claims 1 to 4.

6. A non-transitory computer-readable storage medium, when instructions in the storage medium are executed by a processor of an electronic device, the electronic device is caused to implement the method for controlling a voice control device according to any one of claims 1 to 4.

**Patentansprüche**

1. Verfahren zum Steuern einer Vielzahl von Sprachsteuerungsvorrichtungen, das auf eine Positionierungsvorrichtung eines Benutzers oder eine Mastersteuerungsvorrichtung der Positionierungsvorrichtung anwendbar ist, **dadurch gekennzeichnet, dass** es umfasst:

Bestimmen (S31) eines Abstands zwischen der Positionierungsvorrichtung und einer entdeckten Sprachsteuerungsvorrichtung;
Bestimmen (S32) einer auf den Master reagierenden Sprachsteuerungsvorrichtung basierend auf dem Abstand zwischen der Positionierungsvorrichtung und der entdeckten Sprachsteuerungsvorrichtung, wobei die auf den Master reagierende Sprachsteuerungsvorrichtung so ausgebildet ist, dass sie auf eine von einem Benutzer ausgegebene Steuerungsstimme reagiert;
Senden einer ersten Anzeigenachricht an die auf den Master reagierende Sprachsteuerungsvorrichtung, um anzuzeigen, dass die auf den Master reagierende Sprachsteuerungsvorrichtung die entsprechende auf den Master reagierende Sprachsteuerungsvorrichtung zum Reagieren auf die Steuerungsstimme ist; und
als Reaktion auf das Bestimmen, dass sich die ermittelte auf den Master reagierende Sprachsteuerungsvorrichtung von einer vorhandenen auf den Master reagierenden Sprachsteuerungsvorrichtung unterscheidet, Senden einer zweiten Anzeigenachricht an die vorhandene auf den Master reagierende Sprachsteuerungsvorrichtung, um anzuzeigen, dass die vorhandene auf den Master reagierende Sprachsteuerungsvorrichtung nicht mehr die entsprechende auf den Master reagierende Sprachsteuerungsvorrichtung ist;

wobei das Bestimmen (S31) des Abstands zwischen der Positionierungsvorrichtung und der entdeckten Sprachsteuerungsvorrichtung umfasst:

>   Bestimmen des Abstands zwischen der Positionierungsvorrichtung und der entdeckten Sprachsteuerungsvorrichtung basierend auf einem Ultrabreitband-Sitzungsbereich der entdeckten Sprachsteuerungsvorrichtung; oder
>   Bestimmen des Abstands zwischen der Positionierungsvorrichtung und der entdeckten Sprachsteuerungsvorrichtung basierend auf einer Qualität eines empfangenen drahtlosen Kommunikationssignals der entdeckten Sprachsteuerungsvorrichtung.

2. Verfahren nach Anspruch 1, das ferner umfasst:
   wenn die von der Positionierungsvorrichtung entdeckte Sprachsteuerungsvorrichtung oder die Master-Steuerungsvorrichtung der Positionierungsvorrichtung eine Ultrabreitband-Sitzung unterstützt, Aufbauen einer Ultrabreitband-Sitzung zwischen der Positionierungsvorrichtung und der Sprachsteuerungsvorrichtung.

3. Verfahren nach Anspruch 2, wobei die Ultrabreitband-Sitzung für eine Vielzahl von Sprachsteuerungsvorrichtungen aufgebaut wird und
   die Signalqualitätsunterschiede zwischen der Vielzahl von Sprachsteuerungsvorrichtungen kleiner als ein voreingestellter Differenzschwellenwert sind oder Signalqualitäten der Vielzahl von Sprachsteuerungsvorrichtungen größer als ein voreingestellter Signalqualitätsschwellenwert sind.

4. Verfahren nach einem der Ansprüche 1 bis 3, das ferner umfasst:

>   wenn eine voreingestellte Auslösebedingung erfüllt ist, Neubestimmen des Abstands zwischen der Positionierungsvorrichtung und der entdeckten Sprachsteuerungsvorrichtung; wobei
>   die voreingestellte Auslösebedingung eines oder mehrere aus dem Erreichen eines voreingestellten Zeitraums, dem Entdecken einer neuen Sprachsteuerungsvorrichtung und dem Bewegen der Positionierungsvorrichtung um einen voreingestellten Abstand umfasst.

5. Vorrichtung zum Steuern einer Sprachsteuerungsvorrichtung, die aufweist:

>   einen Prozessor;
>   einen Speicher zum Speichern von Anweisungen, die von dem Prozessor ausführbar sind;
>   wobei der Prozessor dazu ausgebildet ist, das Verfahren zum Steuern der Sprachsteuerungsvorrichtung nach einem der Ansprüche 1 bis 4 auszuführen.

6. Nicht-transitorisches computerlesbares Speichermedium, wobei, wenn Befehle in dem Speichermedium von einem Prozessor einer elektronischen Vorrichtung ausgeführt werden, die elektronische Vorrichtung veranlasst wird, das Verfahren zum Steuern einer Sprachsteuerungsvorrichtung nach einem der Ansprüche 1 bis 4 zu implementieren.

## Revendications

1. Procédé de commande d'une pluralité de dispositifs de commande vocale, applicable à un dispositif de positionnement d'un utilisateur ou à un dispositif de commande maître du dispositif de positionnement, **caractérisé par** les étapes consistant à :

>   déterminer (S31) une distance entre le dispositif de positionnement et un dispositif de commande vocale découvert ;
>   déterminer (S32) un dispositif de commande vocale réactif maître sur la base de la distance entre le dispositif de positionnement et le dispositif de commande vocale découvert, le dispositif de commande vocale réactif maître étant configuré pour répondre à une voix de commande émise par un utilisateur ;
>   envoyer un premier message d'indication au dispositif de commande vocale réactif maître pour indiquer que le dispositif de commande vocale réactif maître est le dispositif de commande vocale réactif maître correspondant permettant de répondre à la voix de commande ; et
>   en réponse à la détermination du fait que le dispositif de commande vocale réactif maître déterminé est différent d'un dispositif de commande vocale réactif maître existant, envoyer un second message d'indication au dispositif de commande vocale réactif maître existant pour indiquer que le dispositif de commande vocale réactif maître existant n'est plus le dispositif de commande vocale réactif maître correspondant ;

dans lequel l'étape de détermination (S31) de la distance entre le dispositif de positionnement et le dispositif de commande vocale découvert consiste à :

déterminer la distance entre le dispositif de positionnement et le dispositif de commande vocale découvert sur la base d'une plage de session à ultra large bande du dispositif de commande vocale découvert ; ou

déterminer la distance entre le dispositif de positionnement et le dispositif de commande vocale découvert sur la base d'une qualité d'un signal de communication sans fil reçu du dispositif de commande vocale découvert.

2. Procédé selon la revendication 1, comprenant en outre l'étape consistant à :
lorsque le dispositif de commande vocale découvert par le dispositif de positionnement ou le dispositif de commande maître du dispositif de positionnement prend en charge une session à ultra large bande, établir une session à ultra large bande entre le dispositif de positionnement et le dispositif de commande vocale.

3. Procédé selon la revendication 2, dans lequel la session à ultra large bande est établie pour une pluralité des dispositifs de commande vocale et
des différences de qualité de signal entre les dispositifs de la pluralité de dispositifs de commande vocale sont inférieures à un seuil de différence prédéfini, ou des qualités de signal des dispositifs de la pluralité de dispositifs de commande vocale sont supérieures à un seuil de qualité de signal prédéfini.

4. Procédé selon l'une quelconque des revendications 1 à 3, comprenant en outre l'étape consistant à :

lorsqu'une condition de déclenchement prédéfinie est satisfaite, déterminer de nouveau la distance entre le dispositif de positionnement et le dispositif de commande vocale découvert ; dans lequel
la condition de déclenchement prédéfinie comprend un ou plusieurs d'une atteinte d'une période de temps prédéfinie, d'une découverte d'un nouveau dispositif de commande vocale, et d'un déplacement du dispositif de positionnement d'une distance prédéfinie.

5. Appareil de commande d'un dispositif de commande vocale, comprenant :

un processeur ;

une mémoire destinée à maintenir des instructions exécutables par le processeur ;

dans lequel le processeur est configuré pour exécuter le procédé de commande du dispositif de commande vocale selon l'une quelconque des revendications 1 à 4.

6. Support d'informations non transitoire lisible par ordinateur, dans lequel, lorsque des instructions maintenues dans le support d'informations sont exécutées par un processeur d'un dispositif électronique, le dispositif électronique est amené à mettre en œuvre le procédé de commande d'un dispositif de commande vocale selon l'une quelconque des revendications 1 à 4.

in response to receiving a control voice issued by a user, determining whether the intelligent voice control device is a master responsive intelligent voice control device — S11

when the intelligent voice control device is the master responsive intelligent voice control device, responding to the control voice — S12

FIG. 1

determining a user positioning device corresponding to the control voice of the user, wherein the user positioning device corresponds to the master responsive intelligent voice control device — S21

determining whether the intelligent voice control device is the master responsive intelligent voice control device based on the user positioning device — S22

FIG. 2

determining a distance between the user positioning device and the intelligent voice control device — S31

based on the distance between the user positioning device and the intelligent voice control device, determining a master responsive intelligent voice control device — S32

FIG. 3

UWB-enabled module of
the intelligent voice
control device

UWB-enabled module of the
positioning device

FIG. 4

500

501

502

determining module

response module

FIG. 5

600

601

602

distance module

determining module

FIG. 6

EP 3 889 957 B1

FIG. 7

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010046586 A1

- US 2015026580 A1